# EUROPEAN PATENT SPECIFICATION

(11) **EP 4 581 509 B1**
(45) Date of publication and mention of the grant of the patent: **15.07.2026**
(21) Application number: 23776184.6
(22) Date of filing: 31.08.2023
(51) Int. Cl.: G06F 21/60, H04L 9/40

(54) **END TO END TRUSTED HSM SETUP USING SECURE DEVICE**
SICHERE END-TO-END-HSM-EINRICHTUNG MIT SICHERER VORRICHTUNG
ÉTABLISSEMENT DE HSM SÉCURISÉE DE BOUT EN BOUT À L'AIDE D'UN DISPOSITIF SÉCURISÉ

(30) Priority: 31.08.2022 EP 22306287
(43) Date of publication of application: 09.07.2025
(73) Proprietor: THALES DIS CPL USA, INC., Austin, TX 78759 (US)
(72) Inventor: TURCAT, Jean-Philippe, 92190 Meudon (FR); HALE, James, 92190 Meudon (FR); RIOU, Mikaël, 92190 Meudon (FR)
(74) Representative: Scheer, Luc
(86) International application number: PCT/US2023/031606
(87) International publication number: WO 2024/049947

(56) References cited:
- WO-A1-2012/048605
- WO-A1-2018/218349
- US-A1- 2005 204 071
- ANONYMOUS: "Luna HSM", 10 August 2013 (2013-08-10), XP055488416, Retrieved from the Internet <URL:http://www.cc.com.pl/pl/prods/safenet/pdf/SafeNet_Product_Brief_Luna_SA.pdf> [retrieved on 20180627]

## Description

### TECHNICAL FIELD

The present invention relates generally to management and configuration of network devices, and more particularly, to securely configuring a Hardware Security Module (HSM) cryptographic unit for networked communications.

### BACKGROUND

A Hardware Security Module (HSM) is a dedicated crypto processing unit that is specifically designed for the hardware protection of the cryptographic key lifecycle. HSMs act as trust anchors that protect the crypto infrastructure of some of the most security-conscious organizations in the world by securely managing, processing, and storing cryptographic keys inside a hardened, tamper-resistant device. Enterprises use hardware security modules to protect transactions, identities, and applications, as HSMs excel at securing cryptographic keys and provisioning encryption, decryption, authentication, and digital signing services for a wide range of applications.

HSM protect keys and are used by applications in on premise, virtual, and cloud environments. They are hardware appliances that can be stored in racks in a data center and associated with cryptographic networking components. They are deployed and securely configured remotely in any of these environments. Because they are secure and operate on sensitive data only authorized applications are allowed access. Access to a HSM is usually controlled via a management interface.

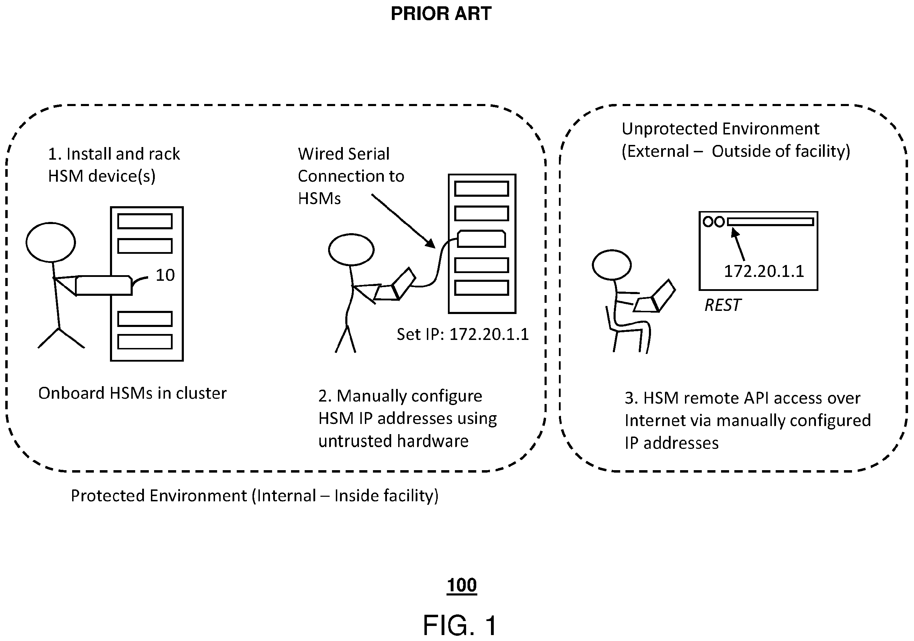

**FIG 1** illustrates an existing work flow for setting up an HSM in a protected environment using untrusted hardware. Here, as seen in the first step, when the lab operator receives a delivery of HSM units, the operator must rack and stack the HSM units within the highly secure lab environment. The operator then powers up and onboards the HSM units onto a network cluster to provide cloud services. This onboarding is the process of connecting a new unit, first to the network, then the Internet, then subsequently enabling services on the unit. A cluster is a collection of individual HSMs that a Cloud HSM service provider synchronizes and maintains such that an external user or customer considers the cluster as one logical HSM for their purposes. From the customer's perspective, when they sign up for HSM services, they commission and use the services of one generic HSM, where the company provisions the HSM according to their specifications. The customer is not responsible for allocation, delegation and maintenance of services amongst the multiple HSMs in the cluster. Generally, onboarding is performed by the company hosting the cluster of HSMs, and includes provisioning and configuring the units for use by a particular customer/user according to their preferences, one of which, is the unit's network configuration settings, such as an Internet Protocol (IP) address.

As seen in the second step, to configure the HSM network communication, the lab operator manually connects a serial cable from a workstation lap-top to the HSM to take control of it, and then manually configures the HSM IP address. The workstation lap-top is however an untrusted device, which may further include a keyboard, mouse, etc. In this existing approach, the HSM detects the serial connection and opens up a terminal window to the untrusted device, here, the workstation lap-top. Although the current implementations support secure shell logging into the HSM over the serial console connection, it only provides for secure access over an unsecured network from the administrators perspective; it does not guarantee the work-station laptop or other device the lab operator uses is trusted or authorized for use
The lab operator, by way of a user interface or command console on the untrusted lap-top through the serial interface, can then manually program in each IP address for the HSM, and any other related parameters, such as MAC addresses, gateway, masks, Ipv4, subnets and so on. This is a tedious manual process that must be done for each HSM during set-up and possibly later if further initialization is required for the network configuration. This manual configuration process is not easily automated because of company policy based lab restrictions. For example, the DHCP protocol cannot be used. In this process, the HSM relies on default user and roles to the initial setup and control of the HSM.. Moreover, the use of a serial port is being deprecated as it adds components costs. Furthermore, it is manually laborious for the lab operator to set-up and configure each HSM unit, for example, finding and identifying the serial port, plugging in the serial cable, connecting and setting up the HSM, reboots, and so on. The complexity increases as some customers request installation and provisioning of many HSMs at once.

A need therefore exists in a cloud based HSM cluster environment for overcoming these inefficiencies and improving the process by which HSM network configurations are controlled and managed.

All of the subject matter discussed in this Background section is not necessarily prior art and should not be assumed to be prior art merely as a result of its discussion in the Background section. Along these lines, any recognition of problems in the prior art discussed in the Background section or associated with such subject matter should not be treated as prior art unless expressly stated to be prior art. Instead, the discussion of any subject matter in the Background section should be treated as part of the inventor's approach to the particular problem, which, in and of itself, may also be inventive.

### SUMMARY

Provided is a system and method for End to End (E2E) trusted Hardware Server Module (HSM) setup using a secure device in a protected environment. Trust is added to the secure device in a first stage that generates and programs secure element content therein. The secure device provides for certificate based authentication, and multi-factor authentication (MFA). The content includes network configuration information for setting up of the HSM. In a second stage, the HSM authenticates and establishes trust with the secure device. Over a secure communication channel, the HSM retrieves the network configuration and initializes the HSM. It automatically assigns the IP, and the key exchange ceremony is a stronger security process than sharing a username password.

In some embodiments, the system securely configures a Hardware Server Module (HSM) initially without prior customer network configuration on that HSM. The system includes a computer within a protected environment for programming a secure element of a trusted device, and an HSM in an onboarding environment for configuring a set-up of the HSM from secure element content within the trusted device.

In some embodiments the computer detects a presence of the secure element in a vicinity of the computer, authenticates the secure element as a trusted device by way of a certificate stored thereon, authenticates a user of the trusted device via the secure element, establishes a secure communication for programming the secure element responsive to authenticating said secure element and authenticating said user, receives a set of Internet Protocol (IP) addresses responsive to user entry on the computer or mobile device for association with a HSM custom network configuration, and securely stores the set of IP addresses in the secure element. In some embodiments the computer is a mobile device with a secure app to connect to and configure the secure element within the trusted device.

In some embodiments HSM detects a presence of the secure element in a vicinity of the HSM, authenticates the secure element as a trusted device to the HSM by way of the certificate stored thereon, authenticates a user of the secure element to the HSM, retrieves the set of IP addresses in the secure element associated with said HSM custom network configuration responsive to authenticating said secure element and authenticating said user, and configures an initial network state of the HSM for external communication with the set of IP addresses.

In some embodiments the secure element is embedded in a smart card having stored thereon a certificate for establishing the smart card as a trusted device, and the presence of the secure element is detected when the smart card is inserted.

In some embodiments the secure element is embedded in a USBC e-Token having stored thereon a certificate for establishing the USBC e-Token as a trusted device, and the presence of the secure element is detected when the USBC e-Token is inserted.

In some embodiments the secure element is embedded in a Near Field Communication (NFC) chip of a mobile device having stored thereon a certificate for establishing the NFC chip as a trusted device, and the presence of the secure element is detected when the NFC chip is in close proximity to the computer or mobile device.

In some embodiments the computer or mobile device or HSM authenticates the user by way of multi-factor authentication (MFA). In some embodiments the step of detecting a presence of the secure element in a vicinity of the HSM occurs automatically upon racking, stacking and onboarding multiple HSMs in the onboarding environment.

In some embodiments the step by the HSM for authenticating the secure element as a trusted device to the HSM by way of the certificate stored thereon comprises linking certificates through a chain of trust down to a self-signed certificate on the HSM to prove that a particular certificate in the chain originates from a trusted manufacturer source associated with the HSM. in some embodiments, the step by the computer or mobile device for securely storing the set of IP addresses in the secure element comprises generating a customer configuration file that includes the set of IP addresses, signing the customer configuration file with a private key associated with a certificate stored on the secure element thereby producing a signed customer configuration file, and storing the signed customer configuration file in the secure element.

In some embodiments the step by the HSM for retrieving the set of IP addresses in the secure element comprises: retrieving the signed customer configuration file in the secure element, validating the signature of the signed customer configuration file with a public key associated with the certificate stored on the secure element, and retrieving the set of IP addresses from the signed customer configuration file. In some embodiments, the signed customer configuration file in the secure element includes a set of unique IP addresses specific to each of the multiple HSMs in the protected environment, whereby upon detection of the presence of the secure element, each of the multiple HSMs is automatically configured with a respective set of the unique IP addresses.

In some embodiments a method for securely configuring a Hardware Server Module (HSM) initially without prior customer network configuration on that HSM is provided. In a first stage of the method a computer generates and programs a secure element of a trusted device to include network configuration information. In a second stage of the method, the HSM retrieves the secure element content and configures an initial set-up of the HSM for network communications. In some embodiments the detection of the presence of the secure element includes one among detecting insertion of a smart card embedded with the secure element, insertion of a USBC eToken embedded with the secure element; and detecting a near-field communication chip embedded with the secure element.

In some embodiments the step of authenticating a user of the secure element includes entry of a personal identification number (PIN) or multi-factor authentication (MFA). In some embodiments the customer configuration file in the secure element includes a set of unique IP addresses specific to each of the multiple HSMs in the protected environment, whereby upon detection of the presence of the secure element, each of the multiple HSMs is automatically configured with a respective set of the unique IP addresses. In some embodiments the step of detecting a presence of the secure element in a vicinity of the HSM occurs automatically upon racking, stacking and onboarding multiple HSMs in the protected environment.

### BRIEF DESCRIPTION OF THE DRAWINGS

The accompanying drawings, which are incorporated in and constitute a part of this description, illustrate embodiments consistent with the invention and, together with the description, serve to explain the principles of the invention.
**FIG. 1** illustrates an existing work flow for setting up an HSM in a non-secure manner using untrusted devices;
**FIG. 2A** depicts a protected environment for generating and programming secure element content into a trusted device thereafter used for configuring an HSM in a secure manner in accordance with an embodiment;
**FIG. 2B** illustrates methods steps for programming the trusted device in the protected environment of FIG 2A in accordance with an embodiment;
**FIG. 3A** depicts an environment for onboarding an HSM with trusted devices used to configure the HSM for network communications in a secure manner in accordance with an embodiment;
**FIG. 3B** illustrates methods steps for onboarding an HSM with trusted devices used to configure the HSM for network communications in a secure manner in accordance with an embodiment; and
**FIG. 4** depicts exemplary components of a Hardware Server Module (HSM) in accordance with one embodiment.

Specific embodiments in this invention have been shown by way of example in the foregoing drawings and are hereinafter described in detail. The figures and written description are not intended to limit the scope of the inventive concepts in any manner. Rather, they are provided to illustrate the inventive concepts to a person skilled in the art by reference to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

In the context of the present description, an HSM is a hardened, tamper-resistant hardware device that secure cryptographic processes by generating, protecting, and managing keys used for encrypting and decrypting data and creating digital signatures and certificates. A "payments HSM" is an HSM for use in financial payments industry. A "hosted HSM" is a payments HSM physically hosted by a computing service provider, for example, within a data center. A "cloud HSM" provides same functionality as on-premises HSMs with the benefits of a cloud service deployment, without the need to host and maintain on premises appliances. A HSM deployment can provide for Software as a Service (SaaS), Platform as a Service (PaaS), or Infrastructure as a Service (laaS) models.

The "configuring" of a HSM refers to the process/procedure of setting up or changing the parameters of the HSM for its operational or administrative use. It can also refer to the configuring of resources/services offered by the HSM (e.g., network, security, users, data protection, etc.) and associated objects (e.g. keys, data, devices, drivers, etc.). Configuration may be further defined by access rights, permissions of policies and for different users or groups (e.g., administrators, officers, users, etc. The "enforcement" of a configuration refers to confirming to adherence of a quorum policy, for example, to confirm a user has permissions to access, view, update or otherwise interact with a resource, service or object.

The term "warranting' is the process of establishing manufacturer's trust in the HSM, usually through a software controlled factory installation process. The term "commissioning" is the process of changing from using the pre-placed HSM manufacturer's trust to the customer's trust by the end-user, usually within an environment controlled by a service provider. The term "provisioning" of a HSM refers to the process/procedure of managing the allocation of the hosted HSM allocation to a particular end-user. A third party "service provider" is a vendor providing the HSM, or component thereof, a service associated with the HSM, or selling the HSM as a service (including microservices), and a "customer" is an end-user of the hosted HSM's payment services.

The acronym "IP" designates any protocol of the Internet protocol suite for operation of network applications, such as, for instance: i) in the Application layer of the OSI model: the Hypertext Transfer Protocol (HTTP) or its secure version HTTPS, DHCP, SMTP, TLS/SSL, etc., ii) in the Transport layer of the OSI model which can be used to transmit data over the Internet or any Local Area Network (LAN) : the Transmission Control Protocol (TCP), the User Datagram Protocol (UDP) needing only one port for full-duplex, bidirectional traffic, the Stream Control Transmission Protocol (SCTP) and the Datagram Congestion Control Protocol (DCCP) which also use port numbers that match the services of the corresponding TCP or UDP implementation, if they exist; and iii), in the Internet (Network) layer: Internet Protocol (IPv4 or IPv6), ICMP, IGMP, etc.

In described embodiments, there will be considered the non-limiting example of a cloud-based (web-based) payment system architecture, wherein a hosted HSM is housed in a data center and is remotely accessible/configurable by end-users, or operators, through the Internet as a communication network. An operator is a user with administrative privileges for configuring the HSM, for example, a system administrator having their own password and a separate device card, such as a Java Card, for providing additional credentials. Here, a user can also refer to an operator with special privileges above a normal user. It will become apparent to the one with ordinary skills in the art, however, that other public and/or private communication, including for instance a Local Area Network (LAN), can be similarly contemplated.

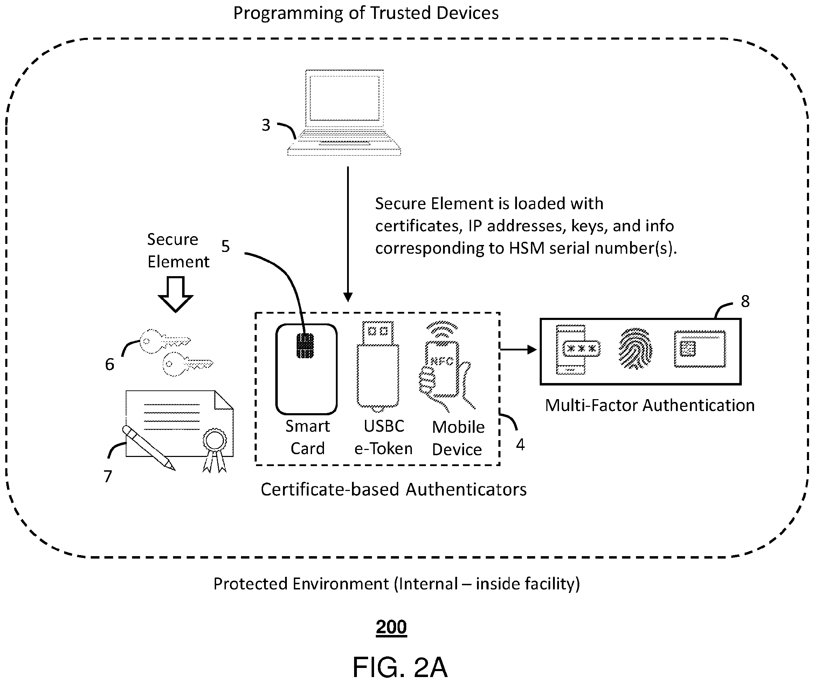

**FIG. 2A** depicts a protected environment for generating and programming secure element content into a trusted device to be used for securely configuring an HSM. The protected environment is the lab facility where one or HSMs are racked and stacked. The trusted device is a certificate based authenticator 4 that is one of a smart card, a USBC e-Token, or a mobile device with near field communication (NFC). The certificate based authenticator 4 is a known device over which the organization has control and can assume a certain level of security. Each certificate based authenticator 4 includes a secure element 5 that contains content, for example, keys 6, certificates 7, IP addresses, and/or other information specifically tied to the HSM, such as a serial number. Once the secure element content is programmed into the trusted device, it will be used to securely configure the network setup of the HSM and guarantee an end to end trust chain.

The secure element 5 is a tamper resistant chip capable of running secure applications with a certain level of security and features. It is an integrated circuit chip that by design protects its host device from unauthorized access and is used to run a limited set of applications, as well as store confidential and cryptographic data. Here, the secure element 5 is pre-programmed with a multi-application OS that takes advantage of the hardware's memory protection features to ensure that each application's data is only available to itself. Application installation and access is controlled by requiring the use of cryptographic keys for each operation. The secure element 5 contains at least one certificate 7 and one or more keys, for example, an asymmetric key pair 6, comprising a private key within a secure memory of the secure element associated with the corresponding public key of a certificate 7 stored therein.

As shown, the workstation lap-top 3 is communicatively coupled to the one or more certificate based authenticators 4, each of which can provide multi-factor authentication. MFA is an authentication method that requires the user to provide two or more verification factors to gain access to a resource. With MFA, a user is granted access only after successfully presenting several separate pieces of evidence to an authentication mechanism - usually from at least two of the following three categories: knowledge--something one knows such as a password or personal identification number (PIN), possession--something one has such as a cryptographic identification device, smart card or secure token, and inherence--biometrics such as fingerprints, iris, face, palm print, etc. The goal of MFA is to create a layered defense and make it more difficult for an unauthorized person to access a target such as a physical location, computing device, network or database.

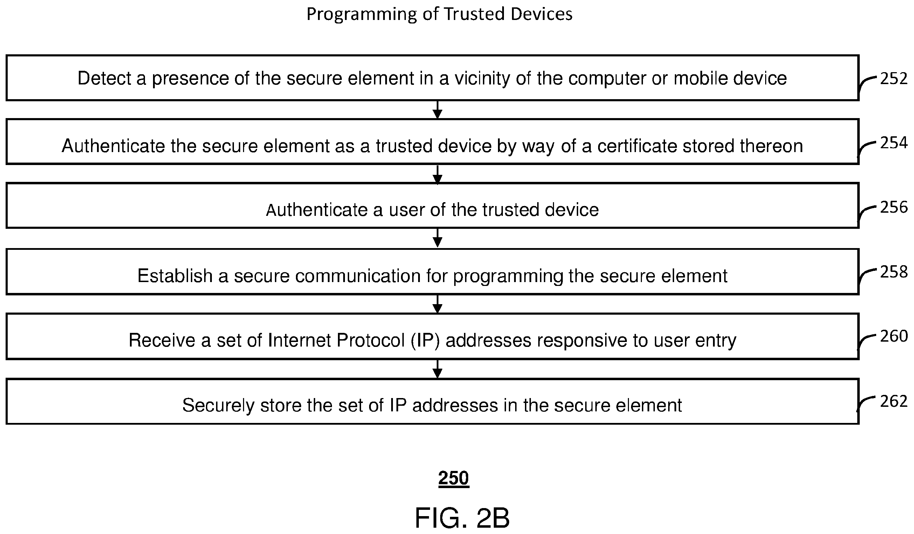

**FIG. 2B** illustrates a method 250 for programming a trusted device in the protected environment of FIG 2A in accordance with an embodiment. The method 250 may include more or less than the number of steps shown and is not limited to only these steps or the order shown. The method 250 is the first part required for generating and programming secure element content into the trusted device; namely, one of the certificate based authenticators 4. Reference will be made to FIG 2A and the components therein when describing the method 250.

Briefly, the workstation 3 is a computer, or lap-top, comprising one or more processors and memory coupled to the one or more processors, wherein the memory includes computer instructions which when executed by the one or more processors causes the one or more processors to perform the operations of the method steps 252-262. In another embodiment, a mobile phone may serve as the computer workstation for programming the trusted device with secure element content.

At step **252,** the workstation 3 detects the presence of the secure element 5. When embedded in a smart card, the presence of the secure element 5 is detected when the smart card is inserted in its card reader port. When embedded in a USBC e-Token, the presence of the secure element 5 is detected when the e-Token is inserted in its USB port. When embedded in an NFC, the presence of the secure element 5 is detected when the NFC is in close proximity to the workstation 3.

At step **254,** the workstation 3 authenticates the secure element as a trusted device by way of the certificate 7 stored thereon. It is one-way because the workstation needs only to authenticate the trusted device, which is occurring here in a protected environment. It should also be noted that multiple certificates might be stored in the secure element. For this device authentication step, this particular certificate may have been issued by a private certificate authority, for example, the internal organization or HSM manufacturer. Once authenticated, a secure channel is configured for communications by and between the workstation 3 and trusted device 4.

At step **256,** the workstation 3 authenticates the user of the trusted device 4 (e.g. smart card) via the secure element 6. At the most basic level, this can occur when the workstation presents the user with a username and password prompt, and the user thereafter responds with correct credentials/responses (securely stored in, and accessed via the secure element 6). As noted above, a more sophisticated user authentication is contemplated with multi-factor authentication. MFA provides greater assurance that user is really who they are claiming to be, and may include the addition to the user password of a one-time password (OTA), a token, an answer to a security question, or a biometric print, as examples.

Once the trusted device and the user are both authenticated, the workstation 3 establishes a secure communication for programming the trusted device with secure element content, as seen in step **258.** These secure communications can be achieved by way of other certificates and keys stored on the certificate based authenticator 4, including SSL/TLS and standard PKI mechanisms for key generation, exchange and session management.

At step **260,** the workstation 3 receives a set of Internet Protocol (IP) addresses responsive to user entry thereon for association with a HSM custom network configuration. For example, the lab operator, knowing what IP addresses are needed to set up the cluster of HSMs in the protected environment, can type them in manually, or by way of DevOps automations and scripting, has those IP addresses entered into the workstation 3, which thereafter programs them into the trusted device (e.g. Smart Card, USBC e-Token, NFC).

At step **262,** the workstation 4 securely stores the set of IP addresses in the secure element 5 of the trusted device. This step further includes generating a customer configuration file 11 that includes the set of IP addresses (other HSM specific/relevant data/information), signing the customer configuration file with a private key 6 associated with a certificate 7 stored on the secure element 5 thereby producing a signed customer configuration file 11, and storing the signed customer configuration file 11 in the secure element 5. In practice, the secure element content (e.g. IP address, serial numbers, etc.) is packaged as a secure app (signed by a private key) only accessible to the secure element, and saved thereon.

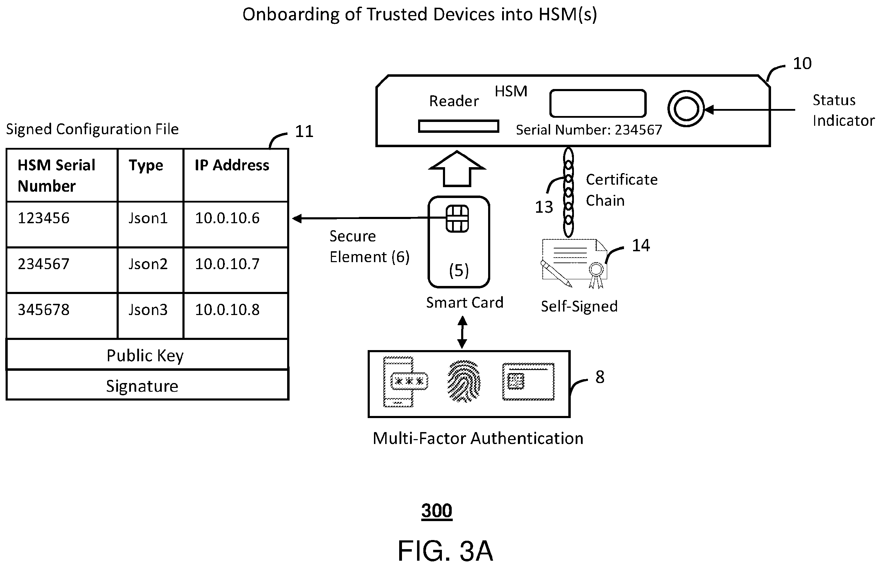

Briefly, **FIG 3A** shows an exemplary signed configuration file 11. This file includes a header section, a body, a public key, and a signature portion. The signature ensures that the HSM knows the secure element content within the file received off the trusted device (here seen as the smart card 5) was signed by the certificate holder. It provides proof of authenticity, data integrity and nonrepudiation of communications and transactions between the HSM and the trusted smart card 5 device. The signed file includes, but is not limited to, the HSM serial number (e.g., 123456) , an object format type (e.g. JSON: a standard readable file format used to transmit data between a server and a web application), and the IP address (e.g. 10.0.10.6) to associate with the HSM. Other HSM specific related parameters may be included in the signed configuration script 11, such as MAC addresses, gateway, masks, Ipv4, subnets and so on.

**FIG. 3A** depicts an environment for onboarding the HSM with trusted devices used to configure the HSM for network communications in a secure manner. Notably, the onboarding effectively occurs after the trusted devices have been programmed with secure element content, as previously described in **FIGS 2A-2B****.** Certificate-based smart cards with MFA, like that shown in **FIG 3A****,** offer a single solution for strong authentication and applications access control, including remote access, network access, password management, and logon to the HSM 10. The secure element facilitates the generation and security of public key infrastructure (PKI) keys and certificates that are used to authenticate HSM operating systems and customer applications. This cryptographic module contains the critical public/private keys, which allows a user access on the critical data and infrastructure.

As shown, the HSM 10 retrieves certificates, IP addresses, keys and info from signed configuration (config) file in secure element corresponding to HSM serial number(s) and configures HSM for network communications. Each HSM has its own specific serial number as well as other identifying information (e.g., MAC network card addresses, security processor with unique identifier). The HSM includes a smart card reader (shown), one or more USB ports, and optionally an NFC chip. Internal to the HSM is a trust model, comprising a certificate chain 13 typically ending on a self-signed root certificate 14. The certificates in the chain may be installed at different phases of the HSM manufacturing. For example, programming of a HSM factory image may include installation of one or more factory certificates; programming of a warranting image may include further installation of one or more warrant certificates, and programming of customer images or software upgrades may include installation of a customer certificate. The warrant certificates provide authenticity information about the HSM manufacturer and components therein. The self-signed root certificate is not necessarily signed by a CA- neither private nor public. Here, the certificate is signed with its own private key, securely stored deep in the HSM hardware, instead of requesting it from a public or a private CA. The HSM also provides APIs for generating, importing and exporting certificates and handling code signing requests.

As noted earlier, the HSM **10** includes a local console that is serial connected over e.g., a USB-C interface. However, in the preferred embodiments of this invention, the serial interface communication for setting up network communication is replaced by way of the trusted device 5 to automatically configure the IP addresses. Upon detection of the trusted device 5 (here seen as a smart card), the HSM establishes a secure communication with the secure element on the smart card, and then executes the secure app on the smart card containing the customer configured secure element content (e.g. IP addresses, etc.), which then automatically configures the network device components within the HSM. To this point, as shown, the HSM include a colored light status indicator. As example, a white color blinking light means HSM is not connected to any network or not assigned an IP address. A solid green colored light means HSM is connected to a network over an assigned IP address. Understandably, other colors, light patterns and variations are contemplated as a function of the automatic IP address configuration stages, for example, based on time and function (success, failure, user input, progress, power, etc.)

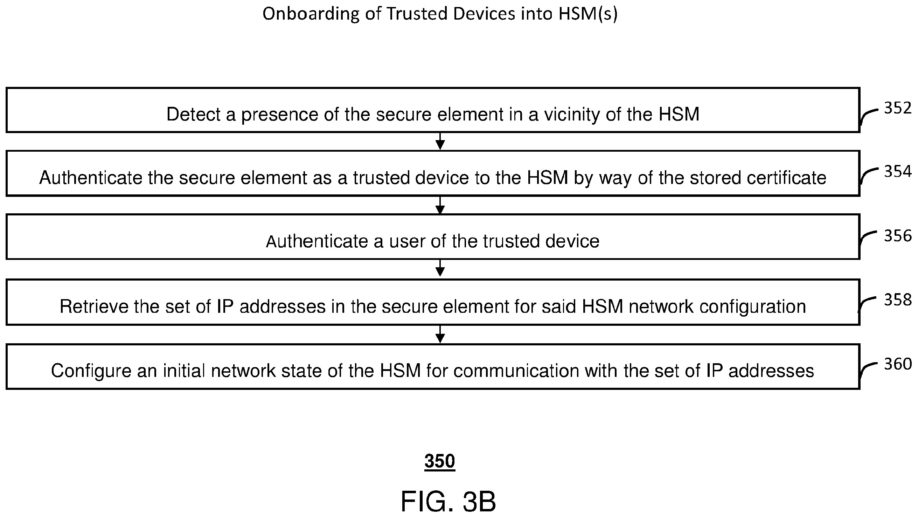

To this point, **FIG. 3B** illustrates a methods 350 for onboarding an HSM with trusted devices used to configure the HSM for network communications in a secure manner in accordance with an embodiment. The method 350 may include more or less than the number of steps shown and is not limited to only these steps or the order shown. The method 350 is the second part required for securely configuring the HSM 10 in a protected onboarding environment initially without prior customer network configuration on that HSM. Reference will be made to FIG 3A and the components therein when describing the method 350.

The HSM 10 comprises one or more processors and memory coupled to the one or more processors, wherein the memory includes computer instructions which when executed by the one or more processors causes the one or more processors to perform the operations of the method steps. At step 352, the HSM 10 detects a presence of the secure element in a vicinity of the HSM. When embedded in a smart card, the presence of the secure element 5 is detected when the smart card is inserted in its card reader port of the HSM. When embedded in a USBC e-Token, the presence of the secure element 5 is detected when the e-Token is inserted in its USB port of the HSM. When embedded in an NFC, the presence of the secure element 5 is detected when the NFC is in close proximity to the HSM 10. In one arrangement,
the step of detecting a presence of the secure element 5 in a vicinity of the HSM 10 occurs automatically upon racking, stacking and onboarding multiple HSMs in the protected environment.

At step **354,** the HSM 10 authenticates the secure element 5 as a trusted device to the HSM by way of the certificate 7 stored thereon. It is one-way because the HSM 10 needs only to authenticate the trusted device. In this illustration, the trusted device is the smart card. For the smart card authentication step, this particular certificate may have been issued by the HSM manufacturer. Once authenticated, the HSM creates a secure channel for communication between it and the smart card. This may include SSL/TLS and standard PKI mechanisms for key generation, exchange and session management. The step by the HSM for authenticating the secure element as a trusted device to the HSM by way of the certificate stored thereon, as seen in **FIG 3A****,** further includes linking certificates through a chain of trust 13 down to a self-signed certificate 14 on the HSM to prove that a particular certificate in the chain originates from a trusted manufacturer source associated with the HSM 10.

At step **356** the HSM 10 authenticates the user of the secure element to the HSM. As previously mentioned in the method 250, user authentication may be performed by way of basic authentication or more sophisticated multi-factor authentication (MFA) approaches. The information to verify and validate the user's identity and information is accessible to the smart card via the secure element.

At step **358,** the HSM 10 retrieves the set of IP addresses in the secure element 5 associated with the HSM custom network configuration responsive to authenticating the secure element and authenticating the user. This step may further include retrieving the signed customer configuration file 11 in the secure element 5, validating the signature of the signed customer configuration file with a public key 6 associated with the certificate 7 stored on the secure element 5, and retrieving the set of IP addresses from the signed customer configuration file 11.

At step **360,** the HSM 10 configures an initial network state of the HSM (10) for external communication with the set of IP addresses. As seen in **FIG 3A****,** the signed customer configuration file 11 in the secure element 5 includes a set of unique IP addresses specific to each of the multiple HSMs in the protected environment, whereby upon detection of the presence of the secure element 5, each of the multiple HSMs is automatically configured with a respective set of the unique IP addresses. Once the HSM 10 is set-up with the IP addresses, it is visible on the network and may be accessed through its standard means, for example, over one or more of its Ethernet ports.

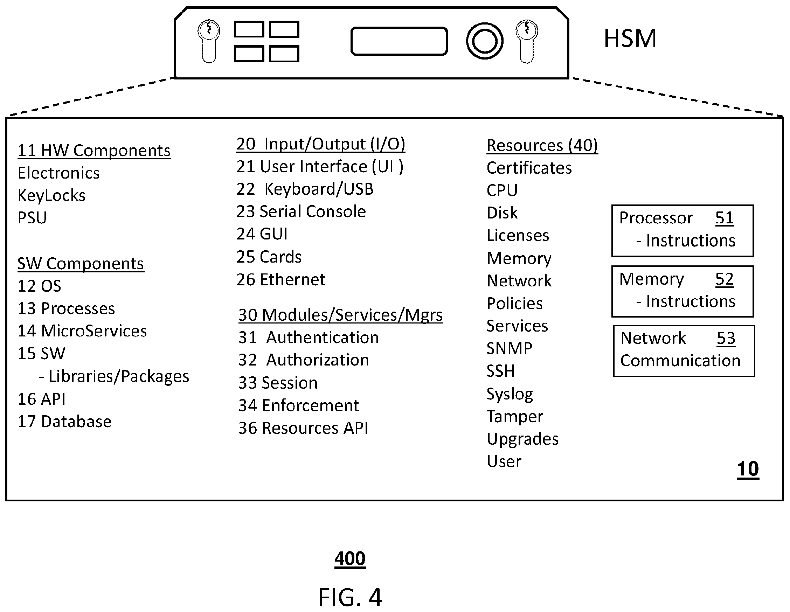

**FIG. 4** depicts exemplary components of the Hardware Server Module (HSM) 10. The HSM **10** is a physical computing device that, among other capabilities, safeguards and manages digital keys, performs encryption and decryption functions for digital signatures, and provides for strong authentication and other cryptographic functions. As a security hardened unit, the HSM **10** records tamper evidence, such as visible signs of tampering or logging and alerting, and provides for tamper responsiveness such as deleting keys upon tamper detection. The HSM **10** contains one or more secure cryptoprocessor and sensor chips to prevent tampering and bus probing, or a combination of chips in a module that is protected by the tamper evident, tamper resistant, or tamper responsive packaging.

The HSM **10** is in effect a computer system comprising one or more processors **51** and memory **52** coupled to the one or more processors, wherein the memory **52** includes computer instructions which when executed by the one or more processors causes the one or more processors to perform the operations of the methods described herein. The HSM may be connected over the network to other machines via the network communication **53** device interface. In a networked deployment, the machine may operate in the capacity of a server or a client user machine in server-client user network environment, or as a peer machine in a peer-to-peer, or distributed, network environment.

Dedicated hardware implementations including, but not limited to, application specific integrated circuits, programmable logic arrays and other hardware devices can likewise be constructed to implement the methods described herein. Applications that may include the apparatus and systems of various embodiments broadly include a variety of electronic and computer systems. Some embodiments implement functions in two or more specific interconnected hardware modules or devices with related control and data signals communicated between and through the modules, or as portions of an application-specific integrated circuit. Thus, the example system is applicable to software, firmware, and hardware implementations.

In accordance with various embodiments of the present disclosure, the methods described herein are intended for operation as software programs running on a computer processor. Furthermore, software implementations can include, but not limited to, distributed processing or component/object distributed processing, parallel processing, or virtual machine processing can also be constructed to implement the methods described herein.

While the machine-readable memory **52** is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies of the present disclosure.

### HSM types

A "general purpose" (GP) HSM is a hardened, tamper-resistant hardware device that strengthen encryption practices by generating keys, encrypting and decrypting data, and creating and verifying digital signatures. GP HSMs may be assembled in clusters and act as a single hardware Root of Trust. It is a critical component of public key infrastructures (PKIs) to generate and protect root and certificate authority keys; code signing to ensure software remains secure, unaltered and authentic; and creating digital certificates for credentialing and authenticating proprietary electronic devices for Internet of Things (IoT) applications and other network deployments. A General Purpose HSM is flexible and can be used in any application that uses cryptographic keys which does not require the additional security controls and regulations imposed by a Payment HSM. Examples include management of the symmetric keys used for database encryption, and management and use of the asymmetric keys used for the creation of digital signatures and certificates to support PKI (Public Key Infrastructure) and crypto wallets.

A "payment" HSM is a hardened, tamper-resistant hardware device that is used primarily by the retail finance or banking industry to provide high levels of protection for cryptographic keys and customer PINs used during the issuance of magnetic stripe and EMV chip cards (and their mobile application equivalents) and the subsequent processing of credit and debit card payment transactions. Payment HSMs normally provide native cryptographic support for all the major card scheme payment applications and undergo rigorous independent hardware certification. Payment HSMs and management tools provide flexible, efficient transaction security for retail payment processing environments, internet payment applications, and web-based PIN delivery.

The main role of a payment HSM is to protect cryptographic keys and other security sensitive data in a highly secure manner, such that the integrity of the overall payment process is maintained, and provide audit and system logs of HSM usage. To that end, HSMs offer the highest level of security by always storing cryptographic keys in intrusion-resistant hardware and providing up to date reporting of its operation. Commonly, HSMs are housed in a data center of a computing resource provider or any similar securely hosting area. More specifically, any HSM hosted in the data center may be attached directly to a server, for instance in a rack, and can be accessed on-site by an operator e.g., through console attach to the HSM via a universal serial bus (USB) connection implementing a USB-C interface, for example.

### Other Embodiments

Operational use of the (GP or Payment) HSM **10** for establishing an End to End (E2E) trusted HSM setup using secure device as shown in **FIG 3A** is primarily by way of the components shown in the figure, but understandably, many more components, electronics, and modules are present in a typical HSM. Those components shown are those mostly related, and suitable for use, for implementing the foregoing inventive methods. Hardware (HW) components **11** represent general electronics for operating the HSM (e.g., processors, central processing units, security, sensors, memory, network devices, ports, power supply units (PSU), wires, keylocks, etc.). The Hardware also contains memory to run operating system and input-output (I/O) devices for interaction. It comprises different types of processors, such as a crypto processor, security processor, general processing unit (GPU), central processing unit (CPU) to assist in protection, management of keys and hardware acceleration with the operating system. The keys, or any other data, can be stored in the database for persistence. The hardware architecture is designed to protect and manage digital keys, and can perform encryption, decryption, digital signature generation and verification.

In one embodiment, the aforementioned (GP or Payment) HSM 10 functionality and methods for the End to End (E2E) trusted HSM setup using the trusted device 5 is configurable as a micro-service. The customer configuration file is exposed via a micro-services API for End to End (E2E) trusted HSM setup using the trusted device.

Micro-services are independent and lightweight processes designed to perform specific tasks. They are typically handled and managed within the HSM by way of the OS **12.** Micro-services **14** can communicate with each other and with external systems over specialized protocols and application programming interface (API) **16.** Micro service are built using software libraries/packages **15,** which are a self-contained set of independent and interchangeable software component that implement a specific functionality. Micro-services **14** and Processes **13** are built using these software libraries/packages **15.** By way of these microservices, applications can implement a third-party Microservice provider's generic API to a service to deliver Payment HSM capabilities. In this manner, for example, a 3^{rd} party customer by way of APIs can partition their workload to optimized payment HSMs for performing specific tasks (e.g. ECC/RSA key gen, PIN translations, etc.) according to their microservice model. As another example, a micro-service with a customer facing API for an End to End (E2E) trusted HSM setup using the trusted device is contemplated. The API can include options allowing the customer to configure trust anchors and certificate chain management for generating and programming the secure content (e.g. IP addresses for network configuration setup) on their workstations and HSM cluster within the protected environment.

The Operating System (OS) **12** is a software component that executes on top of hardware, for example, the general processor, to manage hardware resources and peripherals, run HSM jobs/processes, and help in execution of other processes **13.** Ubuntu is an exemplary OS that provides an embedded Linux distribution with libraries and packages. Ubuntu (GNU / Linux) is a multitasking Operating System capable of executing several processes (tasks) simultaneously. Different processes **13** for performing the HSM functions (data protection, key management, pin translations, etc.) are scheduled by the operating system **12.** A thread is the basic unit to which the operating system allocates processor time. A process **13** is an instance of a computer program that is executed by one or many threads in the GPU or CPU. One or more threads run in the context of the process. A thread can execute any part of the process code, including parts currently being executed by another thread.

In another embodiment, an API **16** is provided for End to End (E2E) trusted HSM setup using the trusted device 5 when configured as a micro-service. The API can be a RESTful API using HTTP requests to produce and consume data related to network config services via at least one of a GET, PUT, POST, PATCH and DELETE command type. The API includes a command set for each stage of warranting, commissioning, and provisioning the HSM during initial set-up and for life-cycle HSM management, including but not limited to certificate management at each stage.

The Applications Programming Interface (API) **16** provides a connection between computers or between computer programs/applications, and/or between computers and people. It is a type of software interface, offering a service to other pieces of software. The API provides a communication channel between HSM components, internal processes **13** and/or micro services **14.** These APIs are exposed on top of input/output (I/O) **20** interfaces. External systems and/or people communicate with HSM via the I/O interfaces **20,** such as a basic user interface (UI) **21,** or more sophisticated graphical user interface (GUI) **24** The HSM can also communicate with external systems through hardware IO interfaces, such as the keyboard **22,** serial port **23,** smart card **25,** Ethernet **26,** optical ports, USB ports, etc. External systems (host computers in a data center) can also talk to HSM software interface via APIs exposed on top of individual hardware interfaces (e.g., network device driver, disk/memory management, etc.).

The HSM **10** includes a local console **23** that is serial connected over e.g., a USB-C interface. The serial interface can be used by operations personnel, namely operators, referred to as DCOps (standing for Data Center Operations), who have physical access to the HSM for manually issuing commands to the HSM. Such USB-C interface is used, for all configuration throughout the HSM service, including initial configuration and cumbersome provisioning processes. The HSM also includes managerial Graphical User Interface (GUI) **24** that over an Ethernet **26** connection allow for remote configuration of the HSM. Also, the I/O **20** can be used to configure network settings, SSH certificates, upgrades, licenses and devices (e.g. CPU, Disk, memory,etc.). Operator (Java) cards **25** also provide a means for provisioning and securing the HSM using key shares and key splits.

The HSM also includes services **30** by way of modules, processes and service managers. Some services may be internal to the HSM, and others may be selectively exposed via the API gateway **16** to external entities or services. Examples of services **30** include authentication **31,** authorization **32,** session manager **33,** enforcement **34,** resource API manager **36,** and quorum manager **37.** Accordingly, service managers can be invoked/managed/configured remotely (external) via their APIs, for example, from a web based GUI (e.g. payShield Manager) via Internet connection over Ethernet to the HSM **10.**

The HSM also includes (internal) resources **40** which can be externally configured via the normal I/O interfaces **20,** and also, for some, (internally and externally) via any of the module/service managers **30** and their respective APIs. Examples of HSM resources include, but are not limited to, certificates, licenses, policies, device management, services, upgrades and so on. Each resource **40** has a respective API for software modules, processes or microservices to interact with the respective resource. The HSM offers access and services to each resource **40** via the resources API **36.** Aside from payments HSM related tasks (e.g. encryption/decryption, key management, etc.), this includes: certificate/license management, SNMP, SSH, memory management/configuration, network management/configuration, upgrade installations/services, user resources, and so on.

The architectural style for APIs is typically categorized as either being SOAP (former acronym for "Simple Object Access Protocol", but referring now to a "Service Oriented Architecture", SOA for Web services) or REST (Representational State Transfer), and both are used to access Web services. While SOAP relies solely on XML to provide messaging services, REST offers a more lightweight method, using URLs in most cases to receive or send information. REST uses different HTTP 1.1 verbs, also known as access "methods" to perform tasks. These methods are GET, POST, PUT, and DELETE, which refers to the reading, updating, creating and deleting of operations concerning objects or resources, respectively. Unlike SOAP, REST does not have to use XML to provide the response. Some REST-based Web services output the data in Command Separated Value (CSV), JavaScript Object Notation (JSON) and Really Simple Syndication (RSS). The advantage with REST is that the output needed can be obtained in a form that is easy to parse within the language of the application specifically concerned.

In the embodiments of the invention presented herein, REST offers an alternative to, for instance, SOAP as method of access to a web service. In order to be used in a REST-based application, a web service needs to meet certain constraints. Such a web service is called RESTful. A RESTful web service is required to provide an application access to its web resources in a textual representation and support reading and modification of them with a stateless protocol and a predefined set of operations. By being RESTful, web services provide interoperability between the computer systems on the internet that provide these services. RESTful APIs embody the rules, routines, commands, and protocols that integrate the individual microservices, so they function as a single application. In a RESTful web service, requests made to a resource's URL will elicit a response with a payload formatted in HTML, XML, JSON, or some other format. The response can confirm that some alteration has been made to the resource state, and the response can provide hypertext links to other related resources. When HTTP is used, the operations (HTTP methods) available can comprise: GET, POST, PUT, DELETE, PATCH, and/or OPTIONS.

The illustrations of embodiments described herein are intended to provide a general understanding of the structure of various embodiments, and they are not intended to serve as a complete description of all the elements and features of apparatus and systems that might make use of the structures described herein. Many other embodiments will be apparent to those of skill in the art upon reviewing the above description. Other embodiments may be utilized and derived therefrom, such that structural and logical substitutions and changes may be made without departing from the scope of this disclosure. Figures are also merely representational and may not be drawn to scale. Certain proportions thereof may be exaggerated, while others may be minimized. Accordingly, the specification and drawings are to be regarded in an illustrative rather than a restrictive sense.

Such embodiments of the inventive subject matter may be referred to herein, individually and/or collectively, by the term "invention" merely for convenience and without intending to voluntarily limit the scope of this application to any single invention or inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. A system for securely configuring a Hardware Server Module (HSM) initially without prior customer network configuration on that HSM, comprising:
a computer (3) or mobile device within a protected environment (200) for programming a secure element (5), the computer or mobile device comprising one or more processors and memory coupled to the one or more processors, wherein the memory includes computer instructions which when executed by the one or more processors causes the one or more processors to perform the operations (250) of:
detecting (252) a presence of the secure element (5) in a vicinity of the computer (3) or mobile device;
authenticating (254) the secure element as a trusted device by way of a certificate (7) stored thereon;
authenticating (256) a user of the trusted device via the secure element;
establishing (258) a secure communication for programming the secure element responsive to authenticating said secure element and authenticating said user;
receiving (260) a set of Internet Protocol (IP) addresses responsive to user entry on the computer or mobile device for association with a HSM custom network configuration;
securely storing (262) the set of IP addresses in the secure element (5); and,
a Hardware Server Module (HSM) in an onboarding environment (300), the HSM (10) comprising one or more processors and memory coupled to the one or more processors, wherein the memory includes computer instructions which when executed by the one or more processors causes the one or more processors to perform the operations (350) of:
detecting (352) a presence of the secure element (5) in a vicinity of the HSM;
authenticating (354) the secure element as a trusted device to the HSM by way of the certificate stored thereon;
authenticating (356) a user of the secure element to the HSM;
retrieving (358) the set of IP addresses in the secure element (5) associated with said HSM custom network configuration responsive to authenticating said secure element and authenticating said user;
configuring (360) an initial network state of the HSM for external communication with the set of IP addresses.

2. The system of claim 1, wherein the secure element (5) is embedded in a smart card having stored thereon a certificate (7) for establishing the smart card as a trusted device, and the presence of the secure element (5) is detected when the smart card is inserted.

3. The system of claim 1, wherein the secure element (5) is embedded in a USBC e-Token having stored thereon a certificate (7) for establishing the USBC e-Token as a trusted device, and the presence of the secure element (5) is detected when the USBC e-Token is inserted.

4. The system of claim 1, wherein the secure element (5) is embedded in a Near Field Communication (NFC) chip of a mobile device having stored thereon a certificate (7) for establishing the NFC chip as a trusted device, and the presence of the secure element (5) is detected when the NFC chip is in close proximity to the computer or mobile device.

5. The system of claim 1, wherein the computer (3) or mobile device or HSM (10) authenticates the user by way of multi-factor authentication (MFA) (8).

6. The system of claim 1, wherein the step by the HSM for authenticating the secure element as a trusted device to the HSM by way of the certificate stored thereon comprises;
linking certificates through a chain of trust (13) down to a self-signed certificate (14) on the HSM to prove that a particular certificate in the chain originates from a trusted manufacturer source associated with the HSM (10).

7. The system of claim 1, wherein the step by the computer or mobile device for securely storing the set of IP addresses in the secure element comprises:
generating a customer configuration file that includes the set of IP addresses;
signing the customer configuration file with a private key (6) associated with a certificate (7) stored on the secure element (5) thereby producing a signed customer configuration file (11); and
storing the signed customer configuration file (11) in the secure element (5).

8. The system of claim 7, wherein the step by the HSM (10) for retrieving the set of IP addresses in the secure element (5) comprises:
retrieving the signed customer configuration file (11) in the secure element (5);
validating the signature of the signed customer configuration file with a public key (6) associated with the certificate (7) stored on the secure element (5); and
retrieving the set of IP addresses from the signed customer configuration file (11).

9. The system of claim 1, wherein the signed customer configuration file (11) in the secure element (5) includes a set of unique IP addresses specific to each of the multiple HSMs in the protected environment, whereby upon detection of the presence of the secure element (5), each of the multiple HSMs is automatically configured with a respective set of the unique IP addresses.

10. The system of claim 9, wherein the step of detecting a presence of the secure element (5) in a vicinity of the HSM (10) occurs automatically upon racking, stacking and onboarding multiple HSMs in the onboarding environment.

11. A method (250/350) for securely configuring a Hardware Server Module (HSM) initially without prior customer network configuration on that HSM, that by way of:
a computer (3) or mobile device within a protected environment (200) for programming a secure element, the computer or mobile device comprising one or more processors and memory coupled to the one or more processors, wherein the memory includes computer instructions which when executed by the one or more processors causes the one or more processors to perform the operations (250) of:
detecting (252) a presence of the secure element (5) in a vicinity of the computer (3) or mobile device;
authenticating (254) the secure element as a trusted device by way of a certificate (7) stored thereon;
authenticating (256) a user of the trusted device via the secure element;
establishing (258) a secure communication for programming the secure element responsive to authenticating said secure element and authenticating said user;
receiving (260) a set of Internet Protocol (IP) addresses responsive to user entry on the computer or mobile device for association with a HSM custom network configuration;
securely storing (262) the set of IP addresses in the secure element;
and,
a Hardware Server Module (HSM) in an onboarding environment (300), the HSM (10) comprising one or more processors and memory coupled to the one or more processors, wherein the memory includes computer instructions which when executed by the one or more processors causes the one or more processors to perform the operations (350) of:
detecting (352) a presence of the secure element in a vicinity of the HSM;
authenticating (354) the secure element as a trusted device to the HSM by way of the certificate (7) stored thereon;
authenticating (356) a user of the secure element to the HSM;
retrieving (358) the set of IP addresses in the secure element (5) associated with said HSM custom network configuration responsive to authenticating said secure element and authenticating said user;
configuring (360) an initial network state of the HSM (10) for external communication with the set of IP addresses.

12. The method of claim 11, wherein the step of detecting the presence of the secure element (5) by the computer or mobile device and the HSM includes one among:
detecting insertion of a smart card embedded with the secure element (5);
detecting insertion of a USBC eToken embedded with the secure element (5); and
detecting a near-field communication chip embedded with the secure element (5),
wherein the step of authenticating a user of the secure element includes entry of a personal identification number (PIN) or multi-factor authentication (MFA) (8).

14. The method of claim 1, wherein the customer configuration file in the secure element includes a set of unique IP addresses specific to each of the multiple HSMs in the protected environment, whereby upon detection of the presence of the secure element, each of the multiple HSMs is automatically configured with a respective set of the unique IP addresses.

15. The method of claim 14, wherein the step of detecting a presence of the secure element in a vicinity of the HSM occurs automatically upon racking, stacking and onboarding multiple HSMs in the protected environment.

## Patentansprüche

1. System zum sicher Konfigurieren eines Hardware-Server-Moduls (HSM), anfänglich ohne vorherige Kundennetzwerkkonfiguration auf diesem HSM, umfassend:
einen Computer (3) oder eine mobile Vorrichtung innerhalb einer geschützten Umgebung (200) zum Programmieren eines sicheren Elements (5), der Computer oder die mobile Vorrichtung umfassend einen oder mehrere Prozessoren und einen Speicher, der mit dem einen oder den mehreren Prozessoren gekoppelt ist, wobei der Speicher Computeranweisungen einschließt, die, wenn sie durch den einen oder die mehreren Prozessoren ausgeführt werden, den einen oder die mehreren Prozessoren veranlassen, die Vorgänge (250) durchzuführen:
Erfassen (252) einer Anwesenheit des sicheren Elements (5) in einer Nähe des Computers (3) oder der mobilen Vorrichtung;
Authentifizieren (254) des sicheren Elements als eine vertrauenswürdige Vorrichtung mittels eines Zertifikats (7), das darauf gespeichert ist;
Authentifizieren (256) eines Benutzers der vertrauenswürdigen Vorrichtung über das sichere Element;
Etablieren (258) einer sicheren Kommunikation zum Programmieren des sicheren Elements als Reaktion auf das Authentifizieren des sicheren Elements und das Authentifizieren des Benutzers;
Empfangen (260) eines Satzes von Internetprotokolladressen (IP-Adressen) als Reaktion auf eine Benutzereingabe auf dem Computer oder der mobilen Vorrichtung für Assoziation mit einer benutzerdefinierten HSM-Netzwerkkonfiguration;
sicheres Speichern (262) des Satzes von IP-Adressen in dem sicheren Element (5);
und,
ein Hardware-Server-Modul (HSM) in einer Onboarding-Umgebung (300), das HSM (10) umfassend einen oder mehrere Prozessoren und den Speicher, der mit dem einen oder den mehreren Prozessoren gekoppelt ist, wobei der Speicher Computeranweisungen einschließt, die, wenn sie durch den einen oder die mehreren Prozessoren ausgeführt werden, den einen oder die mehreren Prozessoren veranlassen, die Vorgänge (350) durchzuführen:
Erfassen (352) einer Anwesenheit des sicheren Elements (5) in einer Nähe des HSMs;
Authentifizierung (354) des sicheren Elements als eine vertrauenswürdige Vorrichtung gegenüber dem HSM mittels des Zertifikats, das darauf gespeichert ist;
Authentifizieren (356) eines Benutzers des sicheren Elements gegenüber dem HSM;
Abrufen (358) des Satzes von IP-Adressen in dem sicheren Element (5), die mit der benutzerdefinierten HSM-Netzwerkkonfiguration assoziiert sind, als Reaktion auf das Authentifizieren des sicheren Elements und das Authentifizieren des Benutzers;
Konfigurieren (360) eines anfänglichen Netzwerkzustands des HSMs für externe Kommunikation mit dem Satz von IP-Adressen.

2. System nach Anspruch 1, wobei das sichere Element (5) in einer Smartcard eingebettet ist, wobei darauf ein Zertifikat (7) zum Etablieren der Smartcard als eine vertrauenswürdige Vorrichtung gespeichert ist und die Anwesenheit des sicheren Elements (5) erfasst wird, wenn die Smartcard eingeführt ist.

3. System nach Anspruch 1, wobei das sichere Element (5) in einem USBC e-Token eingebettet ist, wobei darauf ein Zertifikat (7) zum Etablieren des USBC e-Tokens als eine vertrauenswürdige Vorrichtung gespeichert ist und die Anwesenheit des sicheren Elements (5) erfasst wird, wenn das USBC e-Token eingeführt ist.

4. System nach Anspruch 1, wobei das sichere Element (5) in einem Nahfeldkommunikations-Chip (NFC-Chip) einer mobilen Vorrichtung eingebettet ist, wobei darauf ein Zertifikat (7) zum Etablieren des NFC-Chips als eine vertrauenswürdige Vorrichtung gespeichert ist und die Anwesenheit des sicheren Elements (5) erfasst wird, wenn der NFC-Chip in unmittelbarer Proximität zu dem Computer oder der mobilen Vorrichtung ist.

5. System nach Anspruch 1, wobei der Computer (3) oder die mobile Vorrichtung oder das HSM (10) den Benutzer mittels Multi-Faktor-Authentifizierung (MFA) (8) authentifiziert.

6. System nach Anspruch 1, wobei der Schritt durch das HSM zum Authentifizieren des sicheren Elements als eine vertrauenswürdige Vorrichtung gegenüber dem HSM mittels des Zertifikats, das darauf gespeichert ist, umfasst;
Verknüpfen von Zertifikaten durch eine Vertrauenskette (13) bis hin zu einem selbstsignierten Zertifikat (14) auf dem HSM, um zu beweisen, dass ein bestimmtes Zertifikat in der Kette von einer vertrauenswürdigen Herstellerquelle, die mit dem HSM (10) assoziiert ist, stammt.

7. System nach Anspruch 1, wobei der Schritt durch den Computer oder die mobile Vorrichtung zum sicheren Speichern des Satzes von IP-Adressen in dem sicheren Element umfasst:
Erzeugen einer Kundenkonfigurationsdatei, die den Satz von IP-Adressen einschließt;
Signieren der Kundenkonfigurationsdatei mit einem privaten Schlüssel (6), der mit einem Zertifikat (7), das auf dem sicheren Element (5) gespeichert ist, assoziiert ist, wobei dadurch eine signierte Kundenkonfigurationsdatei (11) erstellt wird; und
Speichern der signierten Kundenkonfigurationsdatei (11) in dem sicheren Element (5).

8. System nach Anspruch 7, wobei der Schritt durch das HSM (10) zum Abrufen des Satzes von IP-Adressen in dem sicheren Element (5) umfasst:
Abrufen der signierten Kundenkonfigurationsdatei (11) in dem sicheren Element (5);
Validieren der Signatur der signierten Kundenkonfigurationsdatei mit einem öffentlichen Schlüssel (6), der mit dem Zertifikat (7), das auf dem sicheren Element (5) gespeichert ist, assoziiert ist; und
Abrufen des Satzes von IP-Adressen aus der signierten Kundenkonfigurationsdatei (11).

9. System nach Anspruch 1, wobei die signierte Kundenkonfigurationsdatei (11) in dem sicheren Element (5) einen Satz eindeutiger IP-Adressen, die spezifisch für jedes der multiplen HSMs in der geschützten Umgebung sind, einschließt, wodurch bei Erfassung der Anwesenheit des sicheren Elements (5) jedes der multiplen HSMs mit einem jeweiligen Satz der eindeutigen IP-Adressen automatisch konfiguriert wird.

10. System nach Anspruch 9, wobei der Schritt des Erfassens einer Anwesenheit des sicheren Elements (5) in einer Nähe des HSMs (10) bei Einsetzen, Stapeln und Onboarding multipler HSMs in der Onboarding-Umgebung automatisch erfolgt.

11. Verfahren (250/350) zum sicher Konfigurieren eines Hardware-Server-Moduls (HSM), anfänglich ohne vorherige Kundennetzwerkkonfiguration auf diesem HSM, mittels:
eines Computers (3) oder einer mobilen Vorrichtung innerhalb einer geschützten Umgebung (200) zum Programmieren eines sicheren Elements, der Computer oder die mobile Vorrichtung umfassend einen oder mehrere Prozessoren und den Speicher, der mit dem einen oder den mehreren Prozessoren gekoppelt ist, wobei der Speicher Computeranweisungen einschließt, die, wenn sie durch den einen oder die mehreren Prozessoren ausgeführt werden, den einen oder die mehreren Prozessoren veranlassen, die Vorgänge (250) durchzuführen:
Erfassen (252) einer Anwesenheit des sicheren Elements (5) in einer Nähe des Computers (3) oder der mobilen Vorrichtung;
Authentifizieren (254) des sicheren Elements als eine vertrauenswürdige Vorrichtung mittels eines Zertifikats (7), das darauf gespeichert ist;
Authentifizieren (256) eines Benutzers der vertrauenswürdigen Vorrichtung über das sichere Element;
Etablieren (258) einer sicheren Kommunikation zum Programmieren des sicheren Elements als Reaktion auf das Authentifizieren des sicheren Elements und das Authentifizieren des Benutzers;
Empfangen (260) eines Satzes von Internetprotokolladressen (IP-Adressen) als Reaktion auf eine Benutzereingabe auf dem Computer oder der mobilen Vorrichtung für Assoziation mit einer benutzerdefinierten HSM-Netzwerkkonfiguration;
sicheres Speichern (262) des Satzes von IP-Adressen in dem sicheren Element;
und,
eines Hardware-Server-Moduls (HSM) in einer Onboarding-Umgebung (300), das HSM (10) umfassend einen oder mehrere Prozessoren und den Speicher, der mit dem einen oder den mehreren Prozessoren gekoppelt ist, wobei der Speicher Computeranweisungen einschließt, die, wenn sie durch den einen oder die mehreren Prozessoren ausgeführt werden, den einen oder die mehreren Prozessoren veranlassen, die Vorgänge (350) durchzuführen:
Erfassen (352) einer Anwesenheit des sicheren Elements in einer Nähe des HSMs;
Authentifizierung (354) des sicheren Elements als eine vertrauenswürdige Vorrichtung gegenüber dem HSM mittels des Zertifikats (7), das darauf gespeichert ist;
Authentifizieren (356) eines Benutzers des sicheren Elements gegenüber dem HSM;
Abrufen (358) des Satzes von IP-Adressen in dem sicheren Element (5), die mit der benutzerdefinierten HSM-Netzwerkkonfiguration assoziiert sind, als Reaktion auf das Authentifizieren des sicheren Elements und das Authentifizieren des Benutzers;
Konfigurieren (360) eines anfänglichen Netzwerkzustands des HSMs (10) für externe Kommunikation mit dem Satz von IP-Adressen.

12. Verfahren nach Anspruch 11, wobei der Schritt des Erfassens der Anwesenheit des sicheren Elements (5) durch den Computer oder die mobile Vorrichtung und das HSM eines umfasst von:
Erfassen einer Einführung einer Chipkarte, die mit dem sicheren Element (5) eingebettet ist;
Erfassen der Einführung eines USBC eTokens, das mit dem sicheren Element (5) eingebettet ist; und
Erfassen eines Nahfeldkommunikations-Chips, der mit dem sicheren Element (5) eingebettet ist, wobei der Schritt des Authentifizierens eines Benutzers des sicheren Elements die Eingabe einer persönlichen Identifikationsnummer (PIN) oder eine Multi-Faktor-Authentifizierung (MFA) (8) einschließt.

14. Verfahren nach Anspruch 1, wobei die Kundenkonfigurationsdatei in dem sicheren Element einen Satz eindeutiger IP-Adressen, die spezifisch für jedes der multiplen HSMs in der geschützten Umgebung sind, einschließt, wodurch bei Erfassung der Anwesenheit des sicheren Elements jedes der multiplen HSMs mit einem jeweiligen Satz der eindeutigen IP-Adressen automatisch konfiguriert wird.

15. Verfahren nach Anspruch 14, wobei der Schritt des Erfassens einer Anwesenheit des sicheren Elements in einer Nähe des HSMs bei Einsetzen, Stapeln und Onboarding multipler HSMs in der geschützten Umgebung automatisch erfolgt.

## Revendications

1. Système permettant de configurer de manière sécurisée un module de serveur matériel (HSM) initialement sans configuration réseau préalable du client sur ce HSM, comprenant :
un ordinateur (3) ou dispositif mobile dans un environnement protégé (200) permettant de programmer un élément sécurisé (5), l'ordinateur ou le dispositif mobile comprenant un ou plusieurs processeurs et une mémoire couplée au ou aux processeurs, dans lequel la mémoire comporte des instructions informatiques qui, lorsqu'elles sont exécutées par le ou les processeurs, amènent le ou les processeurs à réaliser les opérations (250) consistant à :
détecter (252) une présence de l'élément sécurisé (5) au voisinage de l'ordinateur (3) ou du dispositif mobile ;
authentifier (254) l'élément sécurisé en tant que dispositif de confiance au moyen d'un certificat (7) stocké sur celui-ci ;
authentifier (256) un utilisateur du dispositif de confiance par l'intermédiaire de l'élément sécurisé ;
établir (258) une communication sécurisée permettant de programmer l'élément sécurisé en réponse à l'authentification dudit élément sécurisé et à l'authentification dudit utilisateur ;
recevoir (260) un ensemble d'adresses de protocole Internet (IP) en réponse à une entrée d'utilisateur sur l'ordinateur ou le dispositif mobile pour association à une configuration réseau personnalisée HSM ;
stocker de manière sécurisée (262) l'ensemble d'adresses **IP** dans l'élément sécurisé (5) ;
et,
un module de serveur matériel (HSM) dans un environnement d'intégration (300), le HSM (10) comprenant un ou plusieurs processeurs et une mémoire couplée au ou aux processeurs, dans lequel la mémoire comporte des instructions informatiques qui, lorsqu'elles sont exécutées par le ou les processeurs, amènent le ou les processeurs à réaliser les opérations (350) consistant à :
détecter (352) une présence de l'élément sécurisé (5) au voisinage du HSM ;
authentifier (354) l'élément sécurisé en tant que dispositif de confiance auprès du HSM au moyen du certificat stocké sur celui-ci ;
authentifier (356) un utilisateur de l'élément sécurisé auprès du HSM ;
récupérer (358) l'ensemble d'adresses IP dans l'élément sécurisé (5) associé à ladite configuration réseau personnalisée HSM en réponse à l'authentification dudit élément sécurisé et à l'authentification dudit utilisateur ;
configurer (360) un état de réseau initial du HSM pour une communication externe avec l'ensemble d'adresses IP.

2. Système selon la revendication 1, dans lequel l'élément sécurisé (5) est incorporé dans une carte à puce sur laquelle est stocké un certificat (7) permettant d'établir la carte à puce en tant que dispositif de confiance, et la présence de l'élément sécurisé (5) est détectée lorsque la carte à puce est insérée.

3. Système selon la revendication 1, dans lequel l'élément sécurisé (5) est incorporé dans un jeton électronique USBC sur lequel est stocké un certificat (7) permettant d'établir le jeton électronique USBC en tant que dispositif de confiance, et la présence de l'élément sécurisé (5) est détectée lorsque le jeton électronique USBC est inséré.

4. Système selon la revendication 1, dans lequel l'élément sécurisé (5) est incorporé dans une puce de communication en champ proche (NFC) d'un dispositif mobile sur lequel est stocké un certificat (7) permettant d'établir la puce NFC en tant que dispositif de confiance, et la présence de l'élément sécurisé (5) est détectée lorsque la puce NFC est à proximité immédiate de l'ordinateur ou du dispositif mobile.

5. Système selon la revendication 1, dans lequel l'ordinateur (3) ou le dispositif mobile ou le HSM (10) authentifie l'utilisateur au moyen d'une authentification multifactorielle (AMF) (8).

6. Système selon la revendication 1, dans lequel l'étape effectuée par le HSM permettant d'authentifier l'élément sécurisé en tant que dispositif de confiance pour le HSM au moyen du certificat stocké sur celui-ci comprend ;
la liaison de certificats par le biais d'une chaîne de confiance (13) jusqu'à un certificat auto-signé (14) sur le HSM pour prouver qu'un certificat particulier dans la chaîne provient d'une source de fabricant de confiance associée au HSM (10).

7. Système selon la revendication 1, dans lequel l'étape effectuée par l'ordinateur ou le dispositif mobile permettant de stocker de manière sécurisée l'ensemble d'adresses IP dans l'élément sécurisé comprend :
la génération d'un fichier de configuration client qui comporte l'ensemble d'adresses IP ;
la signature du fichier de configuration client avec une clé privée (6) associée à un certificat (7) stocké sur l'élément sécurisé (5), produisant ainsi un fichier de configuration client signé (11) ; et
le stockage du fichier de configuration client signé (11) dans l'élément sécurisé (5).

8. Système selon la revendication 7, dans lequel l'étape effectuée par le HSM (10) permettant de récupérer l'ensemble d'adresses IP dans l'élément sécurisé (5) comprend :
la récupération du fichier de configuration client signé (11) dans l'élément sécurisé (5) ;
la validation de la signature du fichier de configuration client signé avec une clé publique (6) associée au certificat (7) stocké sur l'élément sécurisé (5) ; et
la récupération de l'ensemble d'adresses IP à partir du fichier de configuration client signé (11).

9. Système selon la revendication 1, dans lequel le fichier de configuration client signé (11) dans l'élément sécurisé (5) comporte un ensemble d'adresses IP uniques spécifiques à chacun des multiples HSM dans l'environnement protégé, moyennant quoi, lors de la détection de la présence de l'élément sécurisé (5), chacun des multiples HSM est automatiquement configuré avec un ensemble respectif des adresses IP uniques.

10. Système selon la revendication 9, dans lequel l'étape consistant à détecter une présence de l'élément sécurisé (5) au voisinage du HSM (10) se produit automatiquement lors du rayonnage, de l'empilage et de l'intégration de multiples HSM dans l'environnement d'intégration.

11. Procédé (250/350) permettant de configurer de manière sécurisée un module de serveur matériel (HSM) initialement sans configuration réseau préalable du client sur ce HSM, qui au moyen :
d'un ordinateur (3) ou du dispositif mobile dans un environnement protégé (200) permettant de programmer un élément sécurisé, l'ordinateur ou le dispositif mobile comprenant un ou plusieurs processeurs et une mémoire couplée au ou aux processeurs, dans lequel la mémoire comporte des instructions informatiques qui, lorsqu'elles sont exécutées par le ou les processeurs, amènent le ou les processeurs à réaliser les opérations (250) consistant à :
détecter (252) une présence de l'élément sécurisé (5) au voisinage de l'ordinateur (3) ou du dispositif mobile ;
authentifier (254) l'élément sécurisé en tant que dispositif de confiance au moyen d'un certificat (7) stocké sur celui-ci ;
authentifier (256) un utilisateur du dispositif de confiance par l'intermédiaire de l'élément sécurisé ;
établir (258) une communication sécurisée permettant de programmer l'élément sécurisé en réponse à l'authentification dudit élément sécurisé et à l'authentification dudit utilisateur ;
recevoir (260) un ensemble d'adresses de protocole Internet (IP) en réponse à une entrée d'utilisateur sur l'ordinateur ou le dispositif mobile pour association à une configuration réseau personnalisée HSM ;
le stockage sécurisé (262) de l'ensemble d'adresses IP dans l'élément sécurisé ;
et,
un module de serveur matériel (HSM) dans un environnement d'intégration (300), le HSM (10) comprenant un ou plusieurs processeurs et une mémoire couplée au ou aux processeurs, dans lequel la mémoire comporte des instructions informatiques qui, lorsqu'elles sont exécutées par le ou les processeurs, amènent le ou les processeurs à réaliser les opérations (350) consistant à :
détecter (352) une présence de l'élément sécurisé au voisinage du HSM ;
authentifier (354) l'élément sécurisé en tant que dispositif de confiance auprès du HSM au moyen du certificat (7) stocké sur celui-ci ;
authentifier (356) un utilisateur de l'élément sécurisé auprès du HSM ;
récupérer (358) l'ensemble d'adresses IP dans l'élément sécurisé (5) associé à ladite configuration réseau personnalisée HSM en réponse à l'authentification dudit élément sécurisé et à l'authentification dudit utilisateur ;
configurer (360) un état de réseau initial du HSM (10) pour une communication externe avec l'ensemble d'adresses IP.

12. Procédé selon la revendication 11, dans lequel l'étape consistant à détecter la présence de l'élément sécurisé (5) par l'ordinateur ou le dispositif mobile et le HSM comporte l'une parmi :
la détection de l'insertion d'une carte à puce incorporée à l'élément sécurisé (5) ;
la détection de l'insertion d'un jeton électronique USBC incorporé à l'élément sécurisé (5) ; et
la détection d'une puce de communication en champ proche incorporée à l'élément sécurisé (5), dans lequel l'étape consistant à authentifier un utilisateur de l'élément sécurisé comporte l'entrée d'un numéro d'identification personnel (PIN) ou d'une authentification multifactorielle (AMF) (8).

14. Procédé selon la revendication 1, dans lequel le fichier de configuration client dans l'élément sécurisé comporte un ensemble d'adresses IP uniques spécifiques à chacun des multiples HSM dans l'environnement protégé, moyennant quoi, lors de la détection de la présence de l'élément sécurisé, chacun des multiples HSM est automatiquement configuré avec un ensemble respectif des adresses IP uniques.

15. Procédé selon la revendication 14, dans lequel l'étape consistant à détecter une présence de l'élément sécurisé au voisinage du HSM se produit automatiquement lors du rayonnage, de l'empilage et de l'intégration de multiples HSM dans l'environnement protégé.
